Europäisches Patentamt

European Patent Office

Office européen des brevets

(11) Publication number: **0 587 201 A1**

# EUROPEAN PATENT APPLICATION

(21) Application number: **93118667.0**

(22) Date of filing: **14.09.87**

(51) Int. Cl.⁵: **G06K 11/10**

This application was filed on 19 - 11 - 1993 as a divisional application to the application mentioned under INID code 60.

(30) Priority: **12.09.86 JP 213970/86**

(43) Date of publication of application:
**16.03.94 Bulletin 94/11**

(60) Publication number of the earlier application in accordance with Art.76 EPC: **0 259 894**

(84) Designated Contracting States:
**DE FR GB IT**

(71) Applicant: **WACOM COMPANY, LTD.**
**Onda Building 2-47-5,**
**Ikebukuro,**
**Toshima-ku**
**Tokyo 171(JP)**

(72) Inventor: **Yamanami, Tsuguya**
**303 Maeshima-Mansion,**
**1-10-26, Higashi**
**Okegawa-shi, Saitama-ken, 363(JP)**
Inventor: **Funahashi, Takahiko**
**101 Tomaji Haitsu,**
**256-36, Aza Uwajyuku**
**Noguki, Kuki-shi, Saitama-ken, 346(JP)**
Inventor: **Senda, Toshiaki**
**303 Maeshima-Mansion,**
**1-10-26, Higashi**
**Okegawa-shi, Saitama-ken, 363(JP)**

(74) Representative: **TER MEER - MÜLLER -**
**STEINMEISTER & PARTNER**
**Mauerkircherstrasse 45**
**D-81679 München (DE)**

(54) **Position pointer for digitizer.**

(57) A cordless position pointer (10) used for a digitizer comprises a first tuning circuit (152,153) which is normally closed, for resonating with an electromagnetic wave transmitted from the position detecting area of a digitizer when the position pointer approaches to the position detecting area, so that the position where the pointer approaches the digitizer is notified to the same, and a second tuning circuit (152,154) which is formed when the position pointer touches the position detecting area by an operation, for resonating with said electromagnetic wave, thereby to notify to the digitizer the position where the pointer touches the detecting area.

*FIG. 1*

The present invention relates to a position pointer of a digitizer for digitizing the position pointed by the position pointer and, more particularly, to a cordless position pointer which can notify the positions in both the states of accessing on touching the position detecting area with the position information of the digitizer.

Conventionally as a position pointer of this type, an exciting coil is provided on one end of the pointer, and electromagnetic wave is generated by supplying electric current to the driving coil. Due to this, the electromagnetic wave is provided locally to a plurality of coils which are placed side-by-side on the position detecting area of the digitizer, and a voltage is induced. In another way, an electromagnetic wave is generated locally at the specified timing from a plurality of coils which are placed side-by-side on the position detecting area of the digitizer by supplying electric current to said coils. A voltage is induced to a detecting coil provided on one end of the pointer. The positions are notified by each induced voltage. However, the above-mentioned position pointer requires the cord which supplies an electric current to the exciting coil or the cord for detecting the inducing voltage from the detecting coil. Therefore, there is a disadvantage of operability for the position pointing.

In addition, in order to eliminate the disadvantage of the conventional position pointer, it has been proposed that the cordless position pointer is equipped with a battery to supply the current with the exciting coil, however, it is necessary to exchange a battery or to charge it, which makes the work complicated, in addition, the pointer becomes heavier because of the battery, as a result, the handling characteristic of the position pointer can not be improved.

There is also conventionally the position pointer, as disclosed in Japanese Patent Laid-Open No. Sho 52-91324.
This has a magnetic member on the end of the body. A plurality of driving coils are placed on the position detecting area of the digitizer and are supplied with electric current sequentially, and a plurality of detecting coils which detect the induced voltage sequentially are arranged orthogonally to said driving coils. The driving coils and detecting coils are connected electromagnetically. The position is detected by the induced voltage variation which is produced by the electromagnetic connection variation due to the above-mentioned magnetic member which approaches to, or touches the position detecting area.

In the above-mentioned position pointer, it is possible to eliminate a cord as well as a battery, however, there is a disadvantage that a digitizer can not identify whether the position pointer is placed in the very close proximity of the position detecting area or touches it.

Furthermore, in order to overcome another disadvantage of the conventional position pointer, JP-A-59-3537 discloses a position pointer having a coil or a LC circuit which varies an inductance of the magnetic member, enabling the position detection only when the position pointer is pressed onto the position detecting area. However, when the position pointer is not pressed onto the position detecting area, its position and its state cannot be detected at all, therefore, it is impossible to make sure of a position pointed by a position pointer before the input operation.

Accordingly, a object of the present invention is to provide a position pointer which does not require a cord or a battery, and notifies either the states of approaching to or touching the position detecting area together with the position information to the digitizer.

In order to achieve the object, a cordless position pointer used for a digitizer, wherein the digitizer possesses a position detecting area having a plurality of loop coils arrayed in a side-by-side fashion for producing and receiving an electromagnetic wave, and the digitizer processes voltages induced in some of the loop coils and digitizes a position pointed by the pointer on the position detecting area in more minute precision than a layout distance of said coils, comprising:

a first tuning circuit which is normally closed, for resonating with an electromagnetic wave transmitted from the position detecting area when the position pointer approaches to the position detecting area; and

a second tuning circuit which is formed when the position pointer touches the position detecting area by an operation, for resonating with said electromagnetic wave from the position detecting area:

said first tuning circuit produces a first effective electromagnetic wave caused by said resonation in the basis of said approaching, and notify the digitizer of a position where the pointer is approaching and an state that the pointer is touching to the detecting area;

said second tuning circuit produces a second effective electromagnetic wave caused by said resonation in the basis of said touching the detecting area, and notifies the digitizer of the position where the pointer touches and the state that the pointer touches the detecting area;

thereby a position pointer notifies either the states of approaching to or touching the position detecting area together with the position information to the digitizer.

Fig. 1 is an illustration of the internal structure of one embodiment of the position pointer for the invention;

Fig. 2 is an illustration of the construction of a tuning circuit for the position pointer;

Fig. 3 is the construction showing one example of the digitizer using the position pointer in accordance with the present invention;

Fig. 4 is a block diagram showing the detail of a transmission circuit and a receiving circuit which are incorporated in the digitizer;

Fig. 5 is a waveform chart showing waveforms of signals obtained in various portions of Fig. 4;

Fig. 6 is a timing chart for explaining the basic position detecting operation in the processing device of the digitizer;

Fig. 7 is a graph showing the levels of voltages induced in loop coils in the first cycle of detecting operation;

Fig. 8 is a graph showing the timing of the second and subsequent cycles of detecting operation;

Fig. 9 is an illustration of the construction of other example of the digitizer using the position pointer in accordance with the present invention; and

Fig. 10 is a timing chart similar to that shown in Fig. 8 but showing the timings used in Fig. 9.

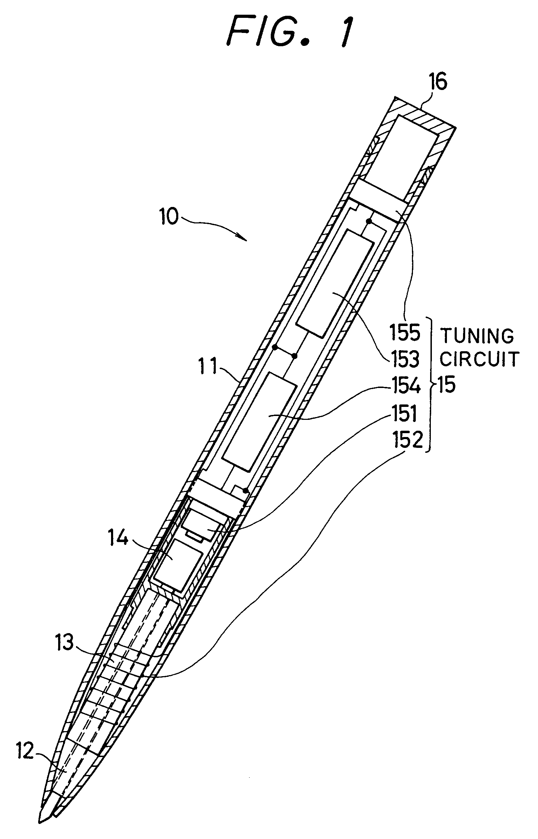

Fig. 1 shows an input pen 10 as one example of the position pointer in accordance with the present invention. The input pen 10 has a pen holder 11 made of a non-metallic material such as a synthetic resin. The pen holder 11 receives, as mentioned from the top end of the pen holder, a pointing member 12, a ferrite core 13 having a hole which slidably receives the pointing member 12, a coiled spring 14, and a tuning circuit 15 constituted by a coil 152 wound around the ferrite core 13, capacitors 153, 154 and a variable capacitor 155. And a cap 16 rested on a rear end of the pen holder.

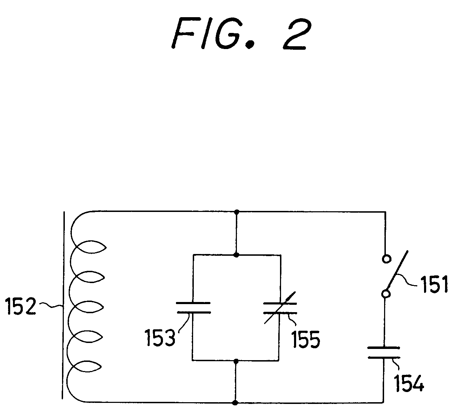

As will be understood also from Fig. 2, the capacitor 153 and the variable capacitor 155 are connected in parallel to each other and both ends of this parallel connection are connected to the coil 152 to form a known resonance circuit. The inductance and capacitances of the coil 152, capacitor 153 and the variable capacitor 155 are so determined that the tuning circuit can resonate with the frequency of the electromagnetic wave produced by the loop coil of the position detecting section.

On the other hand, the capacitor 154 is connected to both ends of the coil 152 through the switch 151. The capacitor 154 has a function to delay the phase of the electric current in the above-mentioned parallel resonance circuit by a predetermined angle, when the switch 151 is closed. When the pointing end of the pointing member 12 is pressed onto the input surface (not shown) of the position detecting section, the switch 151 is pressed by the rear end of the pointing member 12 through the coiled spring 14, whereby the switch 151 is closed.

A first tuning circuit consists of the coil 152, the capacitor 153 and the variable capacitor 155 at the stationary state in which the switch 151 is open, and a second tuning circuit consists of the switch 151, the coil 152, the capacitors 153 and 154 and the variable capacitor 155 at the state in which the pointer is pressed on to the position detecting area thereby the switch is closed. (The above-mentioned "stationary state" includes "the state of not operating".)

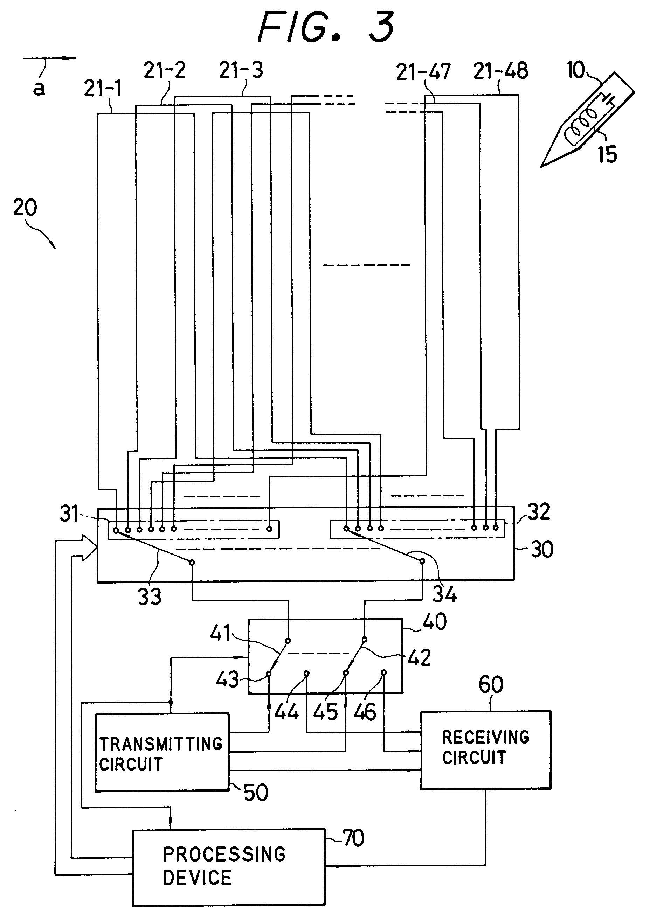

Fig. 3 shows one embodiment of the digitizer using the above-mentioned input pen 10. This is constituted mainly by a position detecting section 20, a selection circuit 30, a receiving circuit 40, a selection circuit 50, a connection switching circuit 60 and a processing device 70.

The position detecting section 20 includes a plurality of parallel conductors which are arrayed in a side-by-side fashion in the direction of position detection. In the illustrated embodiment, 48 loop coils 21-1 to 21-48 are arrayed in the direction of position detection shown by an arrow a. More specifically, these loop coils 21-1 to 21-48 are arranged in parallel in such a manner as to partially overlap the adjacent loop coils. Although in the illustrated embodiment each loop coil has a single turn, this is not exclusive and each loop coil may have two or more turns.

These loop coils may be formed by forming a plurality of parallel conductors by, for example, etching on a known spring substrate and then suitably connecting these conductors by jumper lines such as to form the plurality of loop coil, thereby forming the position detecting section 20.

The selection circuit 30 has a function for successively selecting one from among the plurality of loop coils 21-1 to 21-48. The loop coils 21-1 to 21-48 have one ends connected to a first group of terminals 31 and the other ends connected to the other group of terminals 32. The selecting circuit 30 has a selection contact 33 for selecting one of the terminals 31 of the first group and a selection contact 34 for selecting one from the second group of terminals 32. The selection contacts 33 and 34 are operatively connected to each other so that they selects both ends of the same loop coil, thereby enabling the successive loop coils to be selected one after another.

This selection circuit 30 can simply be constructed by combining a multiplicity of multiplexers which are known per se.

The connection switching circuit 40 is adapted to connect the loop coil selected by the selection circuit 30 alternatingly to the transmission circuit 50 and the receiving circuit 60. The connection switching circuit 40 has selection contacts 41 and 42 to which are connected the selection contacts 33 and 34 of the selection circuit 30 mentioned before. The connection switching circuit 40 also has terminals 43 and 45 connected to two output terminals of the transmission circuit 50 and terminals 44 and 46 connected to two input terminals of the receiving circuit 60. The selection contact 41 adapted to select one of the terminals 43 and 44 and the selection contact 42 adapted to select one of the terminals 45 and 46 are operatively connected to each other so that they are switched simultaneously to connect the selected loop coil either to the transmission circuit 50 or to the receiving circuit 60 in accordance with a later-mentioned transmission/receiving signal.

The connection switching circuit 40 also can be constructed by know multiplexers.

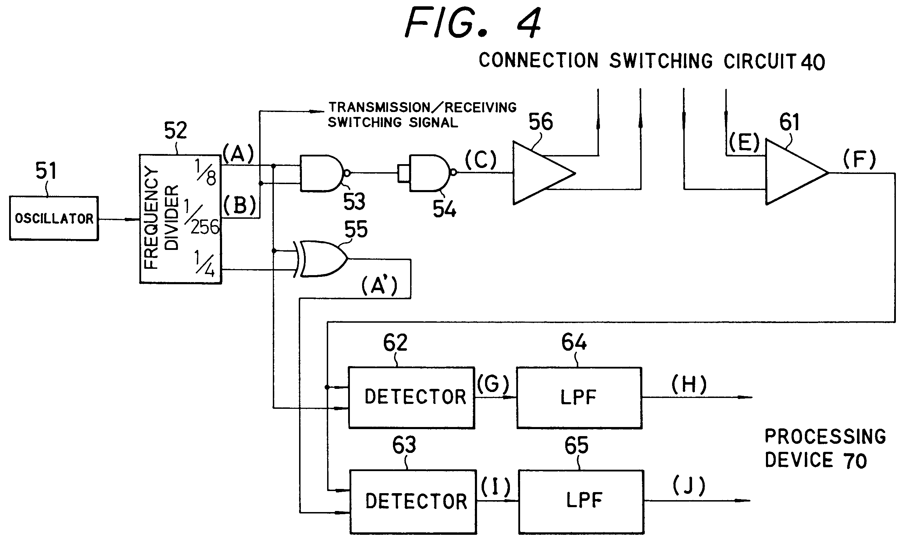

Fig. 4 shows the detail of the transmission circuit 50 and the receiving circuit 60. The transmission circuit 50 is constituted mainly by an oscillator 51, a frequency divider 52, NAND gates 3, 54, an EXCLUSIVE OR (EXOR) gate 55 and a driving circuit 56. On the other hand, the receiving circuit 60 is mainly constituted by an amplifier 61, phase detectors 62, 63, and low-pass filters (LPF) 64, 65.

The processing device 70 controls the switching between the successive loop coils in accordance with a later-mentioned transmission/receiving switching signal and the output of the receiving circuit 60.

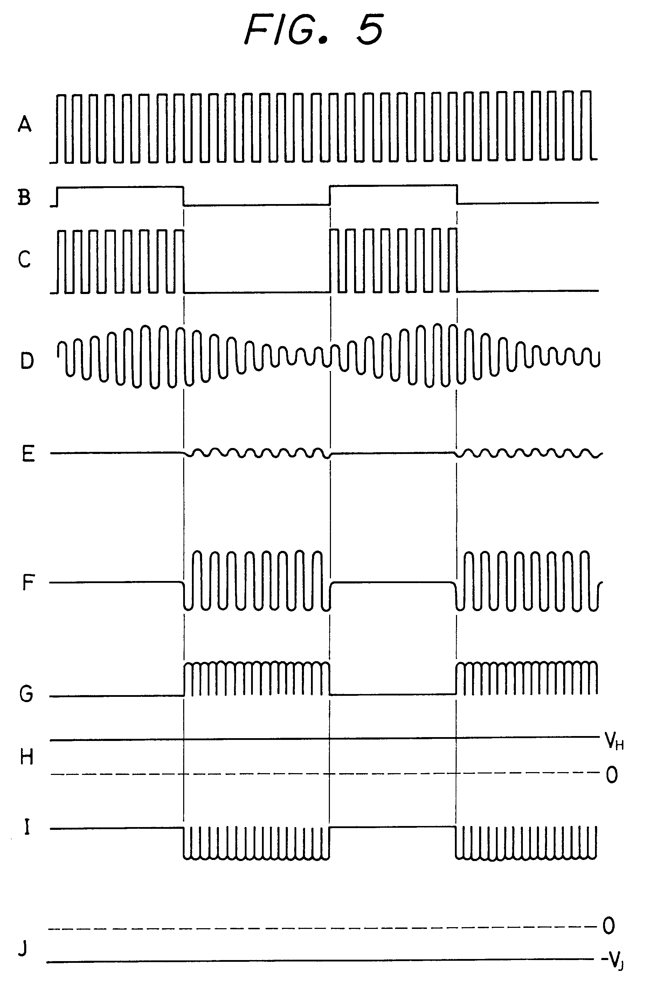

The operation of this embodiment will be described hereinunder. The description will be commenced first in regard to the exchanges of electromagnetic waves between the position detecting section 20 and the input pen 10, as well as signals obtained as a result of the exchange of the electromagnetic waves, with specific reference to Fig. 5.

Clock pulses of a predetermined frequency, e.g., 4 MHz produced by the oscillator 51 are demultiplied by the frequency divider 52 into signals of 1/4, 1/8 and 1/256 frequencies. A pulse signal A of 500 KHz, obtained by demultiplication into 1/8 frequency, is input to one of the input terminals of the NAND gate 53, while the other input terminal of the NAND gate 53 receives a transmission/receiving switching signal B of 15.625 KHz obtained by demultiplication into 1/256 frequency. The output of the NAND gate 53 is inverted through the NAND gate 54 so that a signal C, which outputs a pulse signal of 500 KHz at an interval of 32 $\mu$sec, is obtained.

The signal C is converted into a balance signal by means of the driving circuit 56 and is delivered to one 21-i of a plurality of loop coils constituting the position detection section 26 through the connection switching circuit 40 and the selection circuit 30, so that the loop coil 21-i generates an electromagnetic wave corresponding to the signal C mentioned before.

If the input pen 10 has been held in the vicinity of the loop coil 21-i of the position detecting section 20 substantially perpendicularly to the position detecting section 20, the electromagnetic wave generated by the loop coil 21-i excites the coil 152 of the input pen 10, so that a voltage D is induced in the tuning circuit 15 in synchronism with the signal C.

The receiving period begins when the duration of the signal C expires. As the receiving period starts, the loop coil 21-i is connected to the receiving circuit 60 so that the electromagnetic wave from the loop coil 21-i extinguishes without delay. However, since no change is caused in the circuit elements of the tuning circuit 15 of the input pen 10, the induced voltage is progressively attenuated.

The voltage D induced in the tuning circuit 15 generates an electric current which flows through the coil 152. In consequence, the coil 152 generates an electromagnetic wave which acts to excite the loop coil 21-i which is connected to the receiving circuit 60, so that a voltage E is induced in the loop coil 21-i.

The connection switching circuit 40 is switched by the transmission/receiving switching signal B so that it picks up the signal from the loop coil 21-i only during suspension of transmission of the signal from the loop coil 21-i. Thus, the connection switching circuit 40 delivers the signal voltage E induced in the loop coil 21-i to the amplifier 61. The amplified signal F derived from the amplifier 61 is delivered to the phase detectors 62 and 63.

The phase detector 62 also receives the pulse signal A mentioned before as a phase detecting signal. If the phase of the received signal F coincides with the phase of the pulse signal A, the phase detector 62 produces a signal G which is formed by inverting the received signal F to the positive or plus side. The signal G is converted, by the low-pass filter 64 having a sufficiently low cut-off frequency, into a flat signal H having a voltage level of $V_H$ and the thus obtained signal H is delivered to the processing device 70.

The phase detector 63 also receives, as the detecting signal, a pulse signal A' (not shown) which is formed by the EXOR circuit 55 as Exclusive OR of the pulse signal A and a pulse signal which has a frequency twice as high the frequency of the pulse signal A. Thus, the detecting signal A' has the same frequency as the pulse signal A and a phase which is 90° behind the phase of the pulse signal A. If the phase of the received signal F coincides with the phase of the pulse signal A', the phase detector 63 produces a signal I which is obtained by inverting the received signal F to the negative or minus side. The signal I is input to the low-pass filter 65 having a sufficiently low cut-off frequency so that it is converted into a flat signal J of a voltage level $-V_J$. The thus obtained signal I is delivered to the processing device 70.

If the switch 151 has been turned off in the input pen 10, the phases of the voltage and the current in the tuning circuit at the resonance frequency coincide with each other as explained before. In consequence, the phase of the received signal F and the phase of the pulse signal A coincides with each other. In this state, the voltage appears only in the signal H but no voltage appears in the signal J.

Conversely, if the switch 151 in the input pen 10 has been turned on, the phase of the electric current in the tuning circuit 15 is delayed by a predetermined angle from the phase of the voltage at the resonance frequency, as explained before. Consequently, the phase of the received signal F is delayed by a predetermined angle from the phase of the pulse signal A. In this case, therefore, voltages appear both in the signals H and J. It will be understood, however, the voltage appears only in the signal J if the delay of the phase is 90°.

The signals H and J delivered to the processing device 70 are converted into corresponding digital signals and are subjected to arithmetic operation in accordance with the following formulae (1) and (2).

$$V_X = (V_H^2 + V_J^2)^{1/2} \qquad (1)$$

$$V_\theta = \tan^{-1} (V_J/V_H) \qquad (2)$$

The symbol $V_x$ represents a voltage value which is proportional to the distance between the input pen 10 and the loop coil 21-i, while $V_\theta$ represents a voltage value which is proportional to the phase difference between the voltage and the current in the tuning circuit 15 of the input pen 10.

When the loop coil 21-i which exchanges the electromagnetic waves with the input pen 10 is switched from one to another, the level of the voltage $V_x$ is changed so that the position of the input pen 10 can be detected by examining the voltage value $V_x$ as will be explained later.

On the other hand, the voltage value $V_\theta$ varied only in response to the turning of the switch 151 into on and off states. It is thus possible to distinguish the states of the switch 151 by comparing the voltage value $V_\theta$ with a predetermined threshold voltage.

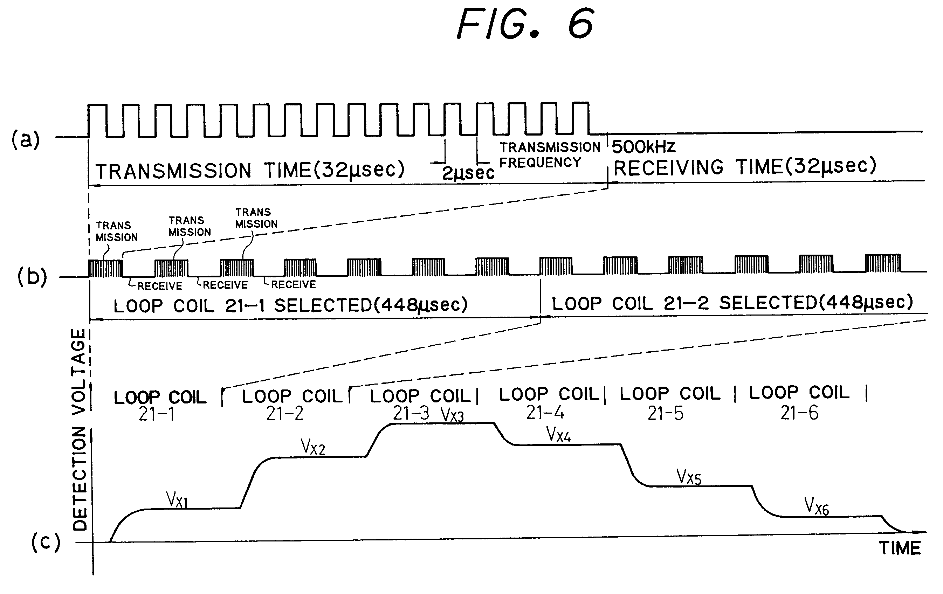

A description will be made hereinunder as to the position detecting operation performed by the apparatus of the present invention, with reference to Figs. 6 to 8.

The position detecting operation is commenced as the power supply is turned on to supply electric power to the whole apparatus. The processing device 70 then delivers to the selection circuit 30 an instruction for enabling the selection circuit 30 to select the first loop coil 21-1 from among the loop coils 21-1 to 21-48 constituting the position detecting section 20, thereby connecting the loop coil 21-1 to the connection switching circuit 40. Then, the connection switching circuit 40 connects the loop coil 21-1 alternatingly to the transmission circuit 50 and the receiving circuit 60 in accordance with the transmission/receiving switching signal B.

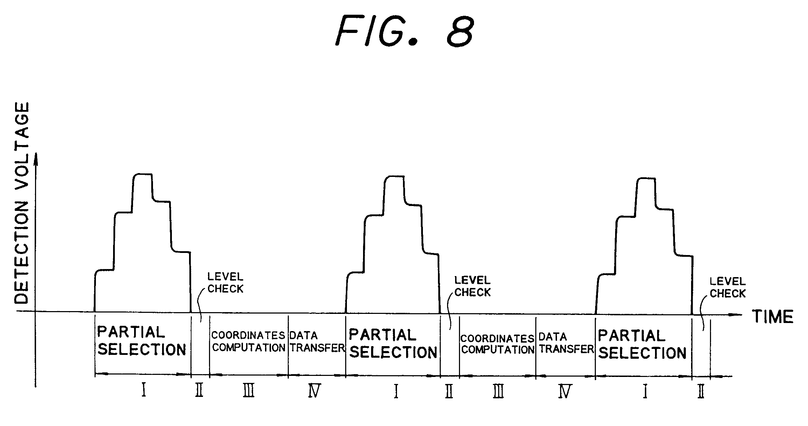

In the transmission period of 32 $\mu$sec, the transmission circuit 50 delivers 16 pieces of pulse of 500 KHz to the loop coil 21-1, as shown in Fig. 6(a). (In Fig. 5, 8 pieces of pulse are shown for the sake of convenience of the drawing.)

The switching between the transmission and receiving is repeated seven times for each loop coil, e.g., for the loop coil 21-1, as shown in Fig. 6-(b). the total period of seven cycles of switching between transmission and receiving corresponds to the period (448 $\mu$sec) over which each coil is selected.

In consequence, the phase detectors 62 and 63 of the receiving circuit 60 produce induced voltages for each of seven signal receiving periods of each loop coil. The induced voltages thus obtained are averaged by the low-pass filters 64 and 65 as explained before, and are then delivered to the processing device 70. These two types of induced voltages are processed by the processing device 70 in accordance with the formulae mentioned before so as to be converted into the detection voltage $V_{x1}$ corresponding to the distance between the input pen 10 and the loop coil 21-1.

Subsequently, the processing device 70 delivers an instruction to the selection circuit 30 for enabling the latter to select the second loop coil 21-2 so that the second loop coil 21-2 is connected to the connection switching circuit 40. Then, a process similar to that explained in connection with the first loop coil 21-1 is executed so that a detection voltage $V_{x2}$ corresponding to the distance between the input pen 10 and the loop coil 21-2 is determined and stored. The described operation is conducted for all the remaining loop coils 21-3 to 21-48 by successively connecting these loop coils 21-3 to 21-48 to the connection switching circuit 40, whereby the respective detection voltages $V_{x1}$ to $V_{x48}$ corresponding to the distances between the input pen 10 and the respective loop coils are obtained as shown in Fig. 6(c). It is to be noted, however, that Fig. 6(c) shows only some of such detection voltages.

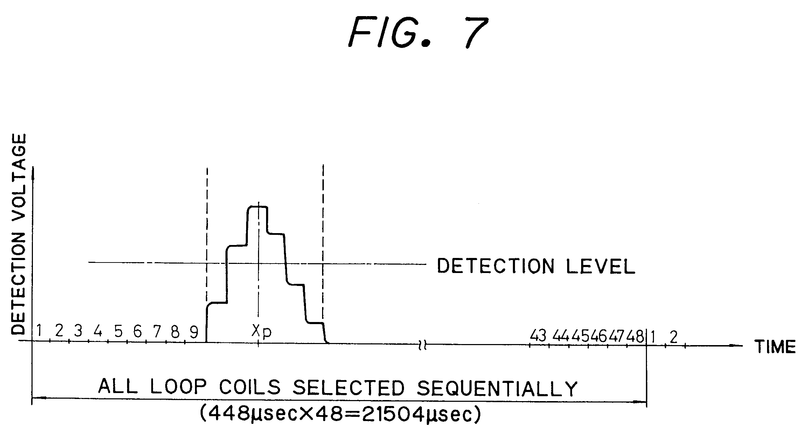

Actually, the detection voltage appears only in several loop coils around the loop coil which is closest to the position (xp) where the input pen 10 is placed, as shown in Fig. 7.

When the voltage value of the stored detection voltage is above the predetermined detection level, the processing device 70 calculates the coordinate value representing the position of the input pen 10 by these voltage values, and displays it or transmits it to the memory section.

When the first position detecting operation is completed in the manner described hereinbefore, the processing device 70 delivers an instruction for enabling the selection circuit 30 to select only a predetermined number of loop coils, e.g., 10 loop coils, around the loop coil which has produced the maximum detection voltage. The position detecting operation is then conducted on these selected loop coils and the coordinate value representing the position of the input pen 10 is determined and delivered to the memory section so as to renew the content of the memory section.

Meanwhile, the processing device 70 computes, not only the detection voltages $V_{x1}$ to $V_{x48}$ for the respective but also the detection voltage $V_{\theta}$ corresponding to the phase difference between the voltage and the current in the tuning circuit 15 of the input pen 10, and compares the thus obtained detection voltage $V_{\theta}$ with a predetermined threshold voltage, for each of the successive loop coils.

The processing device 70 displays the coordinate value as a temporary coordinate value when the switch 151 is turned off, for example, a symbol (+) is displayed at the appropriate coordinate position in the display device without the graphical representation function, and it can process the coordinate value as the coordinate value to be input when the switch 151 is turned on. Consequently when an operator performs the menu input operation and the manual graphic input operation, he can execute the operation while making sure of the position of the input pen 10, thereby providing more accurate operation.

Fig. 8 shows the timings in the second and other subsequent cycles of detecting operation performed by the processing device 70. Referring to this Figure, the period "level check" is a period in which a check is conducted as to whether the maximum value of the detection voltage reaches the aforementioned detection level, and also as to whether which one of the loop coils exhibits the maximum detection voltage. If the level of the maximum detection voltage is below the detection level, the control device 70 stops the computation of the coordinate values and determines the central one of a plurality of loop coils which are to be selected in the next cycle of the detecting operation.

A preferred method of determining the coordinate value xp is to approximate, by a suitable function, the waveform of a curve representing the detection voltages $V_{x1}$ to $V_{x48}$ in a region around a peak of the curve and to determine the coordinates value of the peak in such a function.

For instance, referring to Fig. 6(c), the maximum detection voltage $V_{x3}$ and detection voltages $V_{x2}$ and $V_{x4}$ on both sides of the maximum detection voltage can be approximated by a quadratic function. In such a case, the coordinates value xp of the position of the input pen 10 can be determined as follows. The coordinates values of the centers of the respective loop coils 21-1 to 21-48 are expressed by x1 to x48 and the pitch of the array of the loop coils is expressed by $\Delta x$. The following formulae are derived from the relationships between the detection voltages and the coordinate values of the respective loop coils.

$$V_{X2} = a(x2 - xp)^2 + b \quad (3)$$

$$V_{X3} = a(x3 - xp)^2 + b \quad (4)$$

$$V_{X4} = a(x4 - xp)^2 + b \quad (5)$$

where, a and b represent, respectively constants which meet the condition of a < 0.

It will also be understood that the following relationships exists.

$$x3 - x2 = \Delta x \quad (6)$$

$$x4 - x2 = 2\Delta x \quad (7)$$

The formulae (4) and (5) therefore can be reformed as follows on condition of the relationships shown by the formulae (6) and (7).

$$xp = x2 + \Delta x/2\{(3V_{X2} - 4V_{X3} + V_{X4})/(V_{X2} - 2V_{X3} + V_{X4})\} \quad (8)$$

It will be understood that the coordinate value xp of the input pen 10 can be determined by extracting, from the group of the detection voltages $V_{x1}$ to $V_{x48}$, the maximum value of the detection voltage as determined through the level check and the voltage values obtained immediately before and immediately after the maximum value of the detection voltage, and conducting a computation in accordance with the formulae (8) by using these three voltage values corresponding to the voltages $V_{x2}$, $V_{x3}$ and $V_{x4}$ in formula (8) and the coordinate of the loop coil which has been checked immediately before the check of the loop coil which exhibits the maximum detection voltage, i.e., the coordinate value x2 in the formula (8).

The number of the loop coils employed in the described embodiment, as well as the manner in which the loop coils are arranged, is illustrative and is not intended for restricting the scope of the invention.

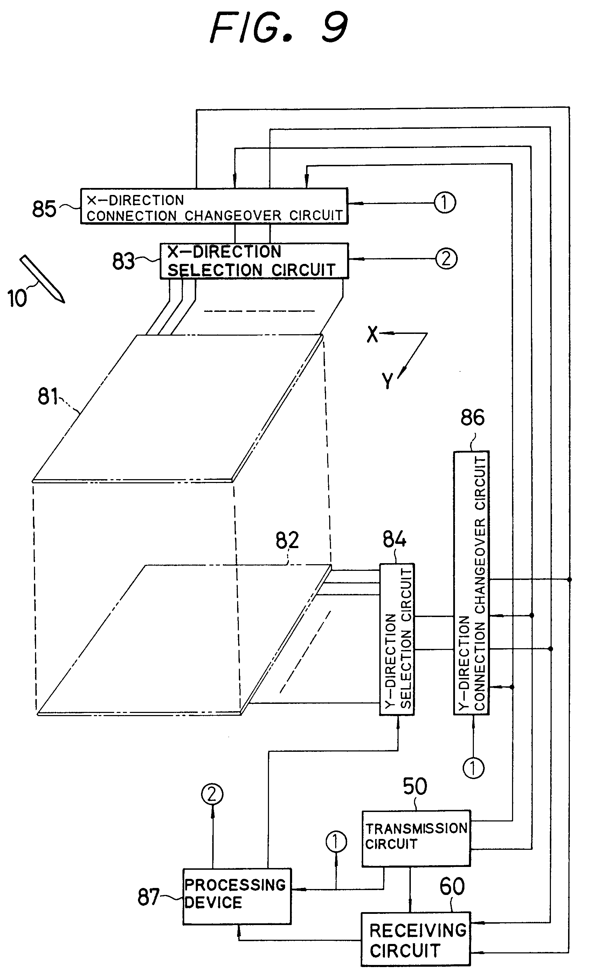

Fig. 9 shows other embodiment using the input pen. This detects the coordinate value of the specified position in X- and Y- directions. In the figure, 81 and 82 shows the X- and Y- direction position detecting area, 83 and 84 shows the X- and Y- direction selection circuit, 85 and 86 shows X- and Y- direction connection switching circuit, which have constructions basically the same as the position detecting area 20, selection circuit 30 and the connection circuit 40 as described above (The details are not shown in Fig. 9.). For the position detection areas 81, 82, each coil is overlayed such as they are crossed in X- and Y- direction orthogonally.

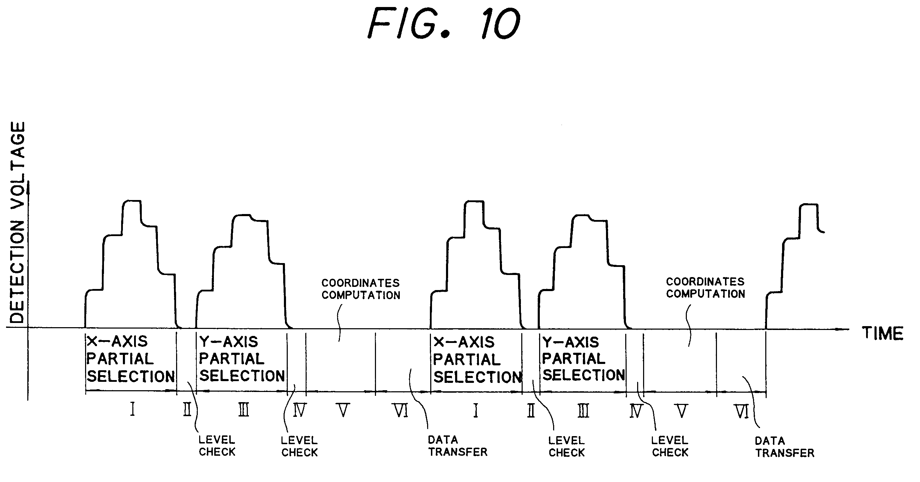

87 shows a processing device which is the same as the above-mentioned device 70, except that it controls the position detection operation such that the position detection in the X- direction and the position detection in the Y- direction are conducted alternately. The timings in the second and subsequent cycles of position detecting operation performed by the processing device 87 are shown in Fig. 10. The constructions of the transmission circuit 50 and receiving circuit 60 are the same as the above-mentioned digitizer.

The digitizer explained so far is the most desirable example among those used in the position pointer according to the present invention, and the digitizer is not restricted to this kind. For example, it is acceptable to arrange a coil for generating the electromagnetic wave separately from a coil for receiving the electromagnetic wave, and in this case, it is also acceptable to generate the electromagnetic wave all the time.

**Claims**

1. A cordless position pointer used for a digitizer, wherein the digitizer possesses a position detecting area having a plurality of loop coils arrayed in such a manner as being overlapped each other for producing and receiving an electromagnetic wave, and the digitizer processes voltages induced in some of the loop coils and digitizes a position pointed by the pointer on the position detecting area in more minute precision than a layout distance of said coils, comprising:

a first tuning circuit which is normally closed, for resonating with an electromagnetic wave transmitted from the position detecting area when the position pointer approaches to the position detecting area; and,

a second tuning circuit which is formed when the position pointer touches the position detecting area by an operation, for resonating with said electromagnetic wave from the position detecting area;

said first tuning circuit produces a first effective electromagnetic wave caused by said resonation on the basis of said approaching, and notifies the digitizer of a position where the pointer approaches and a state that the pointer approaches to the detecting area;

said second tuning circuit produces a second effective electromagnetic wave caused by said resonation on the basis of said touching the detecting area, and notifies the digitizer of the position where the pointer touches and a state that the pointer touches the detecting area.

EP 0 587 201 A1

# FIG. 1

8

# FIG. 2

# FIG. 3

# FIG. 4

CONNECTION SWITCHING CIRCUIT 40

PROCESSING
DEVICE 70

EP 0 587 201 A1

# FIG. 5

# FIG. 6

(a) TRANSMISSION TIME(32μsec) 2μsec TRANSMISSION FREQUENCY 500kHz RECEIVING TIME(32μsec)

(b) TRANS MISSION TRANS MISSION TRANS MISSION RECEIVE RECEIVE RECEIVE
LOOP COIL 21-1 SELECTED(448μsec) LOOP COIL 21-2 SELECTED(448μsec)

(c) DETECTION VOLTAGE

LOOP COIL 21-1 | LOOP COIL 21-2 | LOOP COIL 21-3 $V_{X3}$ | LOOP COIL 21-4 | LOOP COIL 21-5 | LOOP COIL 21-6

$V_{X1}$ $V_{X2}$ $V_{X4}$ $V_{X5}$ $V_{X6}$

TIME

EP 0 587 201 A1

# FIG. 7

EP 0 587 201 A1

DETECTION VOLTAGE

DETECTION LEVEL

1 2 3 4 5 6 7 8 9   Xp   43 44 45 46 47 48 | 1 2   TIME

ALL LOOP COILS SELECTED SEQUENTIALLY
(448μsec×48=21504μsec)

# FIG. 8

DETECTION VOLTAGE

LEVEL CHECK

TIME

| PARTIAL SELECTION | COORDINATES COMPUTATION | DATA TRANSFER | PARTIAL SELECTION | COORDINATES COMPUTATION | DATA TRANSFER | PARTIAL SELECTION |
|---|---|---|---|---|---|---|

I   II   III   IV   I   II   III   IV   I   II

EP 0 587 201 A1

15

# FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int.Cl.4) |
|---|---|---|---|
| A | US-A-4 205 199 (MOCHIZUKI)<br>* figures 2-4,10 *<br>* column 3, line 65 - column 6, line 49 *<br>--- | 1 | G06K11/10 |
| A | EP-A-0 184 835 (WACOM COMPANY LTD.)<br>* figures 1,10 *<br>* page 7, line 20 - line 25 *<br>* page 16, line 16 - page 17, line 11 *<br>----- | 1 | |

**TECHNICAL FIELDS SEARCHED** (Int.Cl.4)

G06K

The present search report has been drawn up for all claims

| Place of search | Date of completion of the search | Examiner |
|---|---|---|
| THE HAGUE | 29 December 1993 | Weiss, P |

EPO FORM 1503 03.82 (P04C01)